# EUROPÄISCHE PATENTSCHRIFT

(11) **EP 2 145 824 B1**
(45) Veröffentlichungstag und Bekanntmachung des Hinweises auf die Patenterteilung: **22.05.2013**
(21) Anmeldenummer: 09012407.4
(22) Anmeldetag: 16.01.2008
(51) Int. Cl.: B64D 41/00

(54) **Energieversorgungssystem eines Luftfahrzeuges**
Power supply system for an aircraft
Système d'alimentation en énergie d'un aéronef

(30) Priorität: 16.01.2007 DE 102007002283; 16.04.2007 DE 102007017820
(43) Veröffentlichungstag der Anmeldung: 20.01.2010
(62) Teilanmeldung aus: 08000782.6
(73) Patentinhaber: Liebherr-Aerospace Lindenberg GmbH, 88161 Lindenberg/Allgäu (DE)
(72) Erfinder: Metzler, Dirk, 88179 Oberreuter (DE); Ludwig, Matthias, 88161 Lindenberg (DE); Cremer, Ralf, 88131 Lindau (DE); Herzog, Jacques, 88171 Simmerberg (DE); Ried, Georg, 88175 Scheidegg (DE)
(74) Vertreter: Herrmann, Uwe

(56) Entgegenhaltungen:
- WO-A-01/34424
- DE-A1-102005 010 399
- US-A- 4 869 071
- US-A1- 2003 075 643

## Beschreibung

Die vorliegende Erfindung betrifft ein Energieversorgungs- und Kühlsystem eines Luftfahrzeuges mit wenigstens einer Brennstoffzelle.

Aus dem Stand der Technik ist es bekannt, zur Not-Energieversorgung eine RAM Air Turbine einzusetzen, deren Welle eine hydraulische Pumpe antreibt, wodurch im Notbetrieb eine ausreichende hydraulische Versorgung gewährleistet wird. Auch ist es möglich, mittels der RAM Air Turbine unmittelbar oder mittelbar über eine hydraulische Pumpe und einen Hydromotor einen Generator anzutreiben, um eine ausreichende Notstromversorgung sicher zu stellen.

Aus dem Stand der Technik ist es ferner bekannt, eine RAM Air Turbine durch ein Brennstoffzellensystem zu substituieren. Eine solche Vorgehensweise ist aus der DE 10 2005 010 399 A1 bekannt, bei der die RAM Air Turbine durch eine Brennstoffzelle ersetzt ist, die über eine Leistungsverteilungseinheit mit einem DC/DC-Wandler und mit einem DC/AC-Wandler in Verbindung steht. Über den DC/DC-Wandler wird eine elektrische Motorpumpe zur Hydraulikversorgung versorgt. Über den DC/AC-Wandler kann elektrische Energie ins Bordnetz eingespeist werden. Bei einer Energieunterversorgung wird das Brennstoffzellensystem durch die genannte Leistungsverteilungseinheit automatisch aktiviert.

Der Ersatz einer RAM Air Turbine durch eine Brennstoffzelle ist darüber hinaus aus der DE 198 21 952 C2 bekannt. Aus dieser Druckschrift geht hervor, dass der in der Brennstoffzelle produzierte Gleichstrom mittels Umrichter in Wechselstrom mit der im Flugzeug üblicherweise verwendeten Spannungsanlage gewandelt wird und sodann eine Hydraulikpumpe und/oder eine Bordstromanlage mit Energie versorgt.

Aus der DE 10 2005 010 399 A1 ist ein Brennstoffzellen-Notsystem bekannt, das ein eigenständiges Kühlsystem mit einer Temperatur-Regelungseinrichtung zur Kühlung und Erwärmung der Brennstoffzelle aufweist.

Bei einem Ausfall oder bei einer Störung der Energieversorgung eines Flugzeuges besteht die Notwendigkeit, die Notenergieversorgung möglichst rasch bereit zu stellen, um möglichst nahtlos den Notbetrieb ermöglichen zu können. Es ist daher die Aufgabe der vorliegenden Erfindung, ein Energieversorgungssystem der eingangs genannten Art dahingehend weiterzubilden, dass dieses zuverlässig und mit einer geringen Startzeit arbeitet.

Diese Aufgabe wird durch ein Energieversorgungs- und Kühlsystem mit den Merkmalen des Anspruchs 1 gelöst. Denkbar ist es, dass das Energieversorgungssystem einen aktiven Energiespeicher aufweist, der derart mit wenigstens einem der Verbraucher in Verbindung steht oder verbindbar ist, dass der oder die Verbraucher wenigstens zeitweise aus dem aktiven Energiespeicher mit Energie versorgt werden. Ein Merkmal der vorliegenden Erfindung besteht somit in der Anordnung eines aktiven Energiespeichers, worunter ein Energiespeicher zu verstehen ist, der im Normalbetrieb des Flugzeuges geladen ist, das heißt im Bedarfsfall sofort zur Verfügung steht. Auf diese Weise ist es möglich, eine unterbrechungsfreie Stromversorgung im Notbetrieb zu gewährleisten. Der aktive Energiespeicher stellt Energie zumindest solange zur Verfügung, bis die Brennstoffzelle ihre Startphase abgeschlossen hat und somit ebenfalls zur Energieversorgung zur Verfügung steht. Der eine oder die mehreren Verbraucher stehen derart mit der Brennstoffzelle in Verbindung, dass sie im Notbetrieb unmittelbar oder mittelbar von der Brennstoffzelle mit Energie versorgt werden.Das Energieversorgungssystem der vorliegenden Erfindung kann somit beispielsweise die Leistungsausgänge "essential power", das heißt die Stromversorgung für die im Notbetrieb erforderlichen Komponenten, wie beispielsweise eine Bordelektronik, sowie "primary flight control power", das heißt die Hydraulikversorgung im Notbetrieb auch während der Startphase der Brennstoffzelle mit Energie versorgen. Eine Flugzeugbatterie kann dadurch eingespart bzw. verkleinert ausgeführt werden.

Der Begriff "Verbraucher" ist weit auszulegen und kann jede beliebige Komponente umfassen, die eine Energieversorgung erfordert. Beispiele können ein oder mehrere Elektromotoren zum Antrieb einer Pumpe für die Hydraulikversorgung oder auch Komponenten der Bordelektronik sein, die im Notbetrieb mit Strom versorgt werden müssen.

Der Energiespeicher kann mit der normalen Energieversorgung derart in Verbindung stehen, dass dieser von der normalen Energieversorgung aufgeladen wird und/oder derart, dass der Energiespeicher bei Bedarf Energie in die normale Energieversorgung einspeist.

Entsprechendes kann auch für die Verbindung zwischen Energiespeicher und Notstromnetz gelten. Auch hier kann ein undirektionaler Energiefluß vom oder zum Energiespeicher oder eine bidirektionale Verbindung zwischen Energiespeicher und Notstromnetz bestehen. Der Energiespeicher kann somit auch zur Netzdämpfung des Notstromnetzes dienen.

In bevorzugter Ausgestaltung der Erfindung ist vorgesehen, dass dem Energiespeicher ein Wandler, vorzugsweise ein bidirektionaler Wandler, vorgeschaltet ist, der vorzugsweise mit der normalen Energieversorgung des Flugzeuges in Verbindung steht und über den der Energiespeicher im Normalbetrieb des Flugzeuges geladen wird. In dieser Ausführungsform der Erfindung ist der aktive Energiespeicher im Normalbetrieb des Flugzeuges vorzugsweise vor Beginn oder während der Flug-mission von der Energieversorgung des Flugzeuges über den Wandler vorgeladen. Der Wandler kann beispielsweise als DC/DC-Wandler ausgeführt sein.

Durch den erfindungsgemäßen Einsatz eines aktiven Energiespeichers werden die Anforderungen der unterbrechungsfreien Energieversorgung des Flugzeuges und das Schaltverhalten der Brennstoffzelle entkoppelt. Daraus ergibt sich der Vorteil, dass beide Subsysteme (Energiespeicher, Brennstoffzelle) in ihrem jeweils optimalen Betriebspunkt betrieben werden können. Die hohe Startzeitanforderung einer Brennstoffzelle (< 1 Sekunde auf nominal Power) wird deutlich entspannt, was einen positiven Einfluß auf das Systemdesign hat.

Ein weiterer Vorteil der Erfindung besteht darin, dass ein kontinuierlicher Funktionstest der einzelnen Komponenten weitestgehend möglich ist. Die verbleibenden Komponenten können durch einen geeigneten Funktionstest (BITE) überwacht werden, ohne die Funktion der Notversorgung zu beschränken. Diese Maßnahme ist von Bedeutung, um die geforderte rechnerische Zuverlässigkeit zu ermöglichen und die Schlafzeiten in der Fehlerberechnung zu eliminieren. Ein solches aktives Monitoring ist zum Erreichen der Zulässigkeitsanforderungen von Vorteil.

In weiterer Ausgestaltung der Erfindung umfasst das Energieversorgungssystem einen bidirektionalen Wandler, der derart ausgeführt ist, dass dieser einen Energiefluß von dem Energiespeicher oder einer sonstigen Energiequelle zu der normalen Energieversorgung des Flugzeuges ermöglicht. Durch Verwendung eines derartigen bidirektionalen Wandlers ist es möglich, den "normal supply", das heißt die normale Bord-Energieversorgung des Flugzeuges durch den Energiespeicher oder sonstige in der Notversorgung vorhandene Energie (z. B. Schwungmassen) zu stützen. Dies kann weitere Vorteile auf der Flugzeugebene haben, wie z. B. die Einsparung von Umrichtern oder Batterien.

Weiterhin kann ein Wandler, vorzugsweise ein bidirektionaler Wandler vorgesehen sein, der derart ausgeführt ist, dass dieser einen Energiefluß von dem Energiespeicher oder einer sonstigen Energiequelle zu der Notstromversorgung des Flugzeuges und/oder von der Notstromversorgung des Flugzeuges zum Energiespeicher oder einer sonstigen Energiequelle ermöglicht.

In weiterer Ausgestaltung der Erfindung ist vorgesehen, dass es sich bei dem Energiespeicher um einen Superkondensator handelt.

Gemäß einer weiteren Ausgestaltung der Erfindung umfasst das Energieversorgungssystem einen Multikonverter, der Leistungselektronik-Komponenten der Elemente des Energieversorgungssystems enthält. Der Multikonverter kann beispielsweise alle Leistungselektronik-Komponenten der hier betrachteten Architektur zur Notversorgung des Luftfahrzeuges (DC/DC-Wandler, Step-Up oder Step-Down (optional bidirektional)), Energiespeicher (Superkondensator), Umrichter für Notstrom, etc. umfassen, die alle zusammen in einem Gehäuse angeordnet sein können.

Dabei kann vorgesehen sein, dass die Leistungselektronik-Komponenten als austauschbare Module oder als integrierte Baugruppen ausgeführt sind. Dadurch kann eine Optimierung der MTBF, Zuverlässigkeit und In-Service-Zuverlässigkeit erreicht werden. Gleiches gilt für die Steuerungskomponenten der hier betrachteten Notversorgung.

Die Module können auch als integrierte oder dezentrale Einheiten vorgesehen sein.

Die Brennstoffzelle kann an den genannten Multikonverter auf galvanischem, elektronischem oder magnetischem Wege angebunden sein.

In weiterer Ausgestaltung der Erfindung ist wenigstens eine elektrische Motorpumpe zur Hydraulikversorgung vorgesehen, deren Antriebseinheit wenigstens zwei Elektromotoren umfaßt, die mit unterschiedlichen Energiequellen in Verbindung stehen oder verbindbar sind. Eine weitere Architekturvariante ist somit das Konzept einer "Hybrid EMP (EMP = elektrische Motorpumpe) zur Hydraulikversorgung. Die Antriebseinheit der Pumpe besteht aus zwei unabhängigen Elektromotoren, die von verschiedenen Energiequellen versorgt werden und eine gemeinsame Hydraulikpumpe antreiben.

Die Kopplung der beiden Antriebssysteme kann beispielsweise über eine gemeinsame Motorwelle oder über ein differentiales Getriebe erfolgen. Somit ist eine weitestgehende Entkopplung der beiden Antriebsstränge gewährleistet, wodurch das Sicherheitsrisiko einer direkten elektrischen Kopplung beider Stromversorgungen beseitigt ist.

Denkbar ist, dass wenigstens einer der Elektromotoren derart angeordnet ist, dass er im Normalbetrieb des Luftfahrzeuges von der normalen Bord-Energieversorgung des Luftfahrzeuges mit Energie versorgt wird. Denkbar ist weiter, dass wenigstens einer der Elektromotoren derart angeordnet ist, dass er im Notbetrieb des Luftfahrzeuges von der Brennstoffzelle bzw. dem aktiven Energiespeicher mit Energie versorgt wird. Werden für die wenigstens zwei Elektromotoren unterschiedliche Motortypen verwendet (beispielsweise ein AC-Motor, der direkt vom Flugzeugnetz gespeist wird, und ein durch einen Umrichter gespeister Motor, der über die Brennstoffzelle oder den Energiespeicher mit Energie versorgt wird), ist das EMP-Design dissimilar, was Vorteile für die Fehlerbetrachtung hat.

Wie bereits oben ausgeführt, kann eine Steuereinrichtung vorgesehen sein, die den Energiespeicher derart ansteuert, dass dieser wenigstens solange Energie einspeist bzw. an die Verbraucher liefert, bis die Brennstoffzelle zur Energieversorgung zur Verfügung steht. In diesem Fall übernimmt der Energiespeicher somit wenigstens solange die Energieversorgung, solange die Brennstoffzelle sich noch in ihrer Startphase befindet.

Erfindungsgemäß ist ein Kühlsystem zur Kühlung von Komponenten des Flugzeuges bzw. des Energieversorgungssystems vorgesehen. Dabei ist vorgesehen, dass die Brennstoffzelle zum Zwecke der Einstellung einer geeigneten Betriebstemperatur der Brennstoffzelle mit diesem Kühlsystem in Verbindung steht. Erfindungsgemäß ist somit vorgesehen, dass zum Zwecke der Begrenzung von Gewicht und Komplexität und zur Erhöhung der Zuverlässigkeit das Brennstoffzellensystem für seine Kühlung einen Teil eines Kühlkreislaufs eines anderen, vorzugsweise flüssigkeitgekühlten Systems mitbenutzt.

Weitere Einzelheiten und Vorteile der Erfindung werden anhand eines in der Zeichnung dargestellten Ausführungsbeispiels näher erläutert. Es zeigen:
- Figur 1:: eine schematische Darstellung des brennstoffzellenbasierten Notstrom- systems gemäß der Erfindung,
- Figur 2:: eine weitere schematische Darstellung des brennstoffzellenbasierten Notstromsystem gemäß der Erfindung,
- Figur 3:: eine schematische Darstellung des Kühlsystems des erfindungsgemä- ßen Energieversorgungssystems und
- Figur 4:: eine schematische Darstellung des erfindungsgemäßen Energieversor- gungssystems mit einer Hybrid EMP.

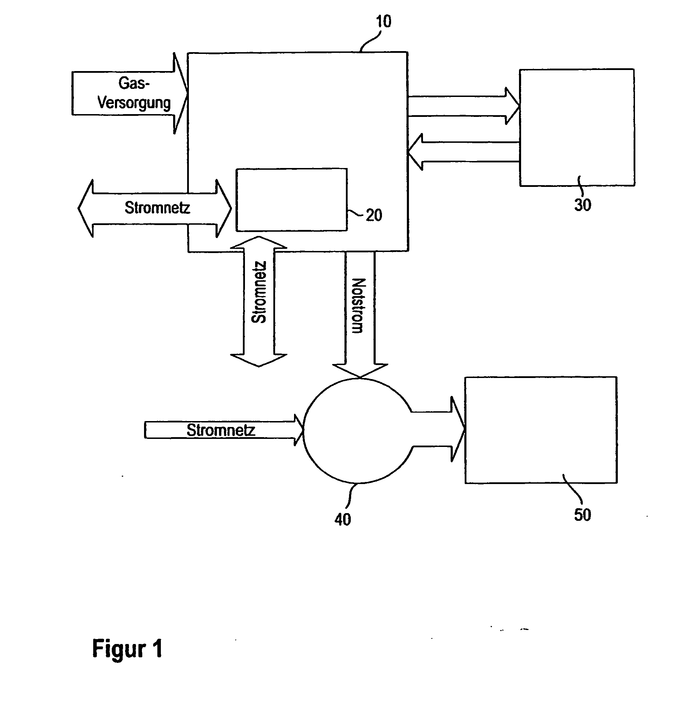

Figur 1 zeigt mit dem Bezugszeichen 10 ein Brennstoffzellensystem, das einerseits eine Brennstoffzelle und andererseits einen aktiven Energiespeicher 20 aufweist. Die in Figur 1 dargestellte Gasversorgung dient zum Betrieb der Brennstoffzelle. Das dargestellte Stromnetz dient dazu, den Energiespeicher 20 vor und während eines Fluges über die normale Bordnetzversorgung ("Stromnetz") aufzuladen bzw. im aufgeladenen Zustand zu halten. Wie dies aus Figur 1 weiter hervorgeht, kann der Energiespeicher 20 auch dazu herangezogen werden, Energie in das Stromnetz einzuspeisen, beispielsweise um einen erhöhten Energiebedarf abzufangen. Die Verbindung ist somit bidirektional.

Im Normalbetrieb des Flugzeuges dient der Energiespeicher 20 somit gleichsam als Puffer des Bord-Stromnetzes.

Mit dem Bezugszeichen 30 ist ein externer Wärmetauscher gekennzeichnet, der beispielsweise als Stauluftkanalwärmetauscher oder auch als Hautwärmetauscher ausgeführt sein kann und der unter anderem zur Temperierung der Brennstoffzellen dient.

Im Falle einer Störung oder des Ausfalls des Stromnetzes wird eine unterbrechungsfreie Stromversorgung dadurch gewährleistet, dass der Energiespeicher 20 die Stromversorgung übernimmt und zwar wenigstens solange, bis die Brennstoffzelle nach ihrer Startphase in einem Betriebszustand arbeitet, in dem sie die erforderliche Energieversorgung sicherstellen kann.

Die Verbindung zwischen Energiespeicher 20 und Notstromnetz ist ebenfalls bidirektional. Der Energiespeicher 20 kann auch für das Notstromnetz zur Netzdämpfung verwendet werden.

Im Rahmen der vorliegenden Erfindung kann eine Steuereinheit oder eine Schalteinheit Verwendung finden, die im Bedarfsfall die Brennstoffzelle mit den zu versorgenden Verbrauchern verbindet bzw. deren Energieversorgung durch den Energiespeicher und die Brennstoffzelle sicherstellt. Dabei ist die Steuereinheit oder die Schalteinheit vorzugsweise derart ausgeführt, dass eine unterbrechungsfreie Energieversorgung sichergestellt wird.

Aus Figur 1 geht weiter mit dem Bezugszeichen 40 ein redundanter Motorantrieb hervor, der aus zwei Elektromotoren besteht, die auf einer gemeinsamen Welle sitzen oder die über ein differentiales Getriebe die Pumpe 50 antreiben. Wie dies aus Figur 1 hervorgeht, wird einer der Elektromotoren über Notstrom gespeist, der von dem Energiespeicher 20 bzw. der Brennstoffzelle bereit gestellt wird und ein anderer Motor über das im Normalbetrieb des Luftfahrzeuges im Einsatz befindliche Bord-Stromnetz.

Die Doppelpfeile in Figur 1 kennzeichnen die bidirketionale Anbindung des Energiespeichers 20 an das jeweilige Stromnetz.

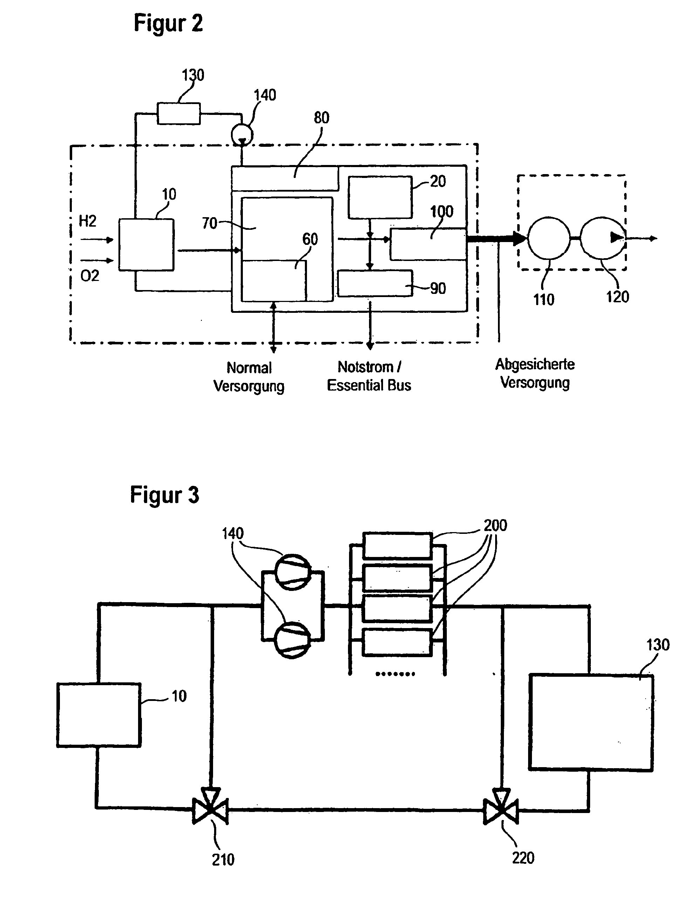

Figur 2 zeigt in einer detailliertere Darstellung das brennstoffzellenbasierte Notstromsystem für Luftfahrzeuge gemäß der vorliegenden Erfindung.

Wie dies aus Figur 2 im einzelnen hervorgeht, wird die Brennstoffzelle 10 mit Wasserstoff und Sauerstoff versorgt und liefert im Bedarfsfall Gleichstrom.

Mit dem Bezugszeichen 20 ist ein Energiespeicher dargestellt, der als Superkondensator ("supercapacitor") ausgeführt ist und der vor einer Flugmission über die normale Stromversorgung des Flugzeuges über einen Wandler 60, 70 aufgeladen wird. Der Wandler 60, 70 ist bidirektional, so dass die von dem Energiespeicher 20 bereitgestellte Energie auch in das normale Stromnetz eingespeist werden kann, etwa um das Stromnetz bei einem besonders hohen Leistungsbedarf zu unterstützen. Der Energiespeicher 20 stellt in diesem Fall einen Puffer für das normale Bord-Stromnetz des Flugzeuges dar.

Mit dem Bezugszeichen 70 ist ein beispielsweise als DC/DC-Wandler ausgeführter Wandler gekennzeichnet, der den von der Brennstoffzelle 10 bereitgestellten Gleichstrom in geeigneter Weise wandelt.

Das Bezugszeichen 80 kennzeichnet einen Multikonverter, in dem die Leistungselektronik-Komponenten der dargestellten Elemente des Energieversorgungssystems zusammengefaßt sind.

Der Umrichter 90 ist ebenfalls bidirektional ausgeführt und dient zur Bereitstellung der gewünschten Strom-/Spannungscharakteristik für die Notstromversorgung ("Notstrom/Essential Bus") von Verbrauchern, wie beispielsweise zur Versorgung von Instrumenten im Notbetrieb, und der Umrichter 100 dient zur Bereitstellung einer geeigneten Strom-/Spannungsversorgung für einen weiteren Verbraucher, der gemäß Fig. 2 durch den Motor 110 einer elektronischen Motorpumpe (EMP) 120 gebildet wird. Über den Wandler 90 kann der Energiespeicher auch für das Notstromnetz zur Netzdämpfung verwendet werden.

Bei dem Umrichtern 90, 100 handelt es sich vorzugsweise um Umrichter mit Hochsetzsteller.

Mit dem Bezugszeichen 130 ist ein Wärmetauscher und mit dem Bezugszeichen 140 eine Pumpe eines Kühlmittelkreislaufes dargestellt.

Im Normalbetrieb des Luftfahrzeuges wird der Energiespeicher 20 durch die normale Bord-Energieversorgung des Flugzeuges über den bidirektionalen Wandler 60 aufgeladen, so dass sich der Energiespeicher 20 bereits zu Beginn der Flugmission im geladenen, das heißt aktiven Zustand befindet.

Fällt die normale Energieversorgung aus oder ist diese gestört, wie dies beispielsweise dann der Fall ist, wenn die Bord-Netzspannung unter einen Grenzwert fällt, wird eine unterbrechungsfreie Stromversorgung dadurch bereitgestellt, dass der aktive Energiespeicher 20 den hier dargestellten Leistungsausgängen "Notstrom/essential bus" sowie den weiteren Verbrauchern ("primary flight control power") Strom bereitstellt, bis sich die Brennstoffzelle 10 nach Abschluß des Startvorgangs in ihrem Betriebszustand befindet. Sobald die Brennstoffzelle ihre Startphase abgeschlossen hat übernimmt diese die weitere Notstromversorgung.

Die Not-Energieversorgung der Ausgänge Notstrom/essential bus bzw. der weiteren Verbraucher, wie z.B. eines Elektromotors, erfolgt über die Umrichter 90, 100, die je nach Bedarf die gewünschte Spannungs-/Stromcharakteristik zur Verfügung stellen.

In Figur 2 ist ein Kühlsystem dargestellt, das zur Kühlung der Elektronikkomponenten des dargestellten Systems dient. Das vorzugsweise flüssige Kühlmittel wird aufgrund der Kühlung der Elektronikkomponenten erwärmt und durchströmt sodann den Brennstoffzellen-Stack 10, wodurch dieser auf einer geeigneten Temperatur gehalten werden kann. Als Wärmetauscher 130 des Kühlsystems kommen beispielsweise ein Hautwärmetauscher oder auch ein in einem Stauluftkanal integrierter Wärmetauscher in Betracht.

Figur 3 zeigt eine derartige Anordnung eines Kühlsystems, wobei mit dem Bezugszeichen 200 verschiedene zu kühlende Komponenten, wie beispielsweise Elektronikkomponenten oder auch andere Komponenten des Flugzeuges oder des Energieversorgungssystems dargestellt sind. Mit dem Bezugszeichen 140 sind zwei parallel angeordnete Pumpen dargestellt, die zur Förderung des Kühlmediums dienen.

Das Bezugszeichen 130 kennzeichnet den Wärmetauscher, der zur Kühlung des flüssigen Kühlmediums dient. Es kann sich - wie ausgeführt - z. B. um einen Hautwärmetauscher oder um einen in einem Stauluftkanal integrierten Wärmetauscher handeln.

Wie dies weiter aus Figur 3 hervorgeht, weist die Brennstoffzelle kein eigenes Kühlsystem auf, sondern ist an das genannte Kühlsystem der Komponenten 200 angeschlossen. Im Normalbetrieb kann beispielsweise durch ein nicht ganz dicht schließendes Ventil 210 gewährleistet werden, dass die durch die Kühlung der Komponenten 200 erwärmte Kühlflüssigkeit genutzt wird, um den Brennstoffzellen-Stack 10 auf einer bestimmten Temperatur zu halten. Dazu dient das in Figur 3 dargestellte Ventil 210. Das Ventil 220 dient dazu, den Anteil des Kühlmittelstroms zu steuern, der in dem Wärmetauscher 130 gekühlt werden soll.

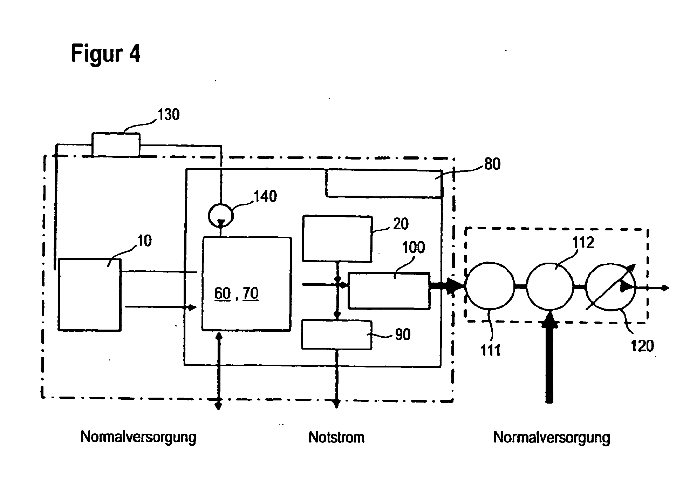

Figur 4 zeigt schließlich eine Architekturvariante des erfindungsgemäßen Energieversorgungssystems mit einer Hybrid EMP. Gleiche oder funktionsgleiche Komponenten sind mit denselben Bezugszeichen versehen wie in Figur 2. Wie dies aus Figur 4 hervorgeht, besteht die Antriebseinheit der Pumpe 120 aus zwei Elektromotoren 111, 112, von denen einer (111) über einen Umrichter 100 von dem Energiespeicher 20 bzw. der Brennstoffzelle 10 im Notbetrieb mit Energie versorgt wird, und wobei der andere der Motoren 112 über die Bord-Energieversorgung des Flugzeuges versorgt wird. Ein Vorteil dieser Anordnung besteht darin, dass die beiden Antriebsstränge weitgehend entkoppelt sind und dass beispielsweise unterschiedliche Motortypen verwendet werden können, so dass das Motordesign dissimilar ist, was Vorteile für die Fehlerbetrachtung mit sich bringt.

Mittels des erfindungsgemäßen Energieversorgungssystems kann eine unterbrechungsfreie Stromversorgung der Leistungsausgänge des Systems realisiert werden und es können somit übergeordnete Synergien auf Flugzeugebene erzielt werden (Gewichtsersparnisse durch Reduzierung oder Entfall der Batterien). Der erfindungsgemäße Energiespeicher wird als aktives Element betrieben.

Zur Erfüllung eines geeigneten Überwachungskonzeptes sowie der Zuverlässigkeitsanforderungen kann die Powerelektronik in einem BITE-Mode aktiv betrieben werden. Dies kann - wie ausgeführt - vorzugsweise dadurch realisiert werden, dass ein beispielsweise als DC/DC-Wandler ausgeführter Wandler betrieben wird und die notwendige Energie in einem Superkondensator abgespeichert wird. Beim Entladen des Superkondensators am Ende der Flug-Mission werden die ausgangsseitigen Leistungsmodule überwacht.

Der Einsatz eines vorzugsweise zusätzlichen bidirektionalen beispielsweise als DC/DC-Wandler ausgeführten Wandler erhöht weiter die Funktion des Systems, auch den normalen Stormversorgungstrakt mit Energie über den aktiven Energiespeicher bzw. Superkondensator zu puffern. Hierdurch können weitere Synergieeffekte auf Flugzeugebene erreicht werden.

Das beschriebene Konzept einer Hybrid EMP ist dissimilar im Ansatz und eliminiert das Problem der Verkopplung beider Stromversorgungspfade, was Sicherheitsvorteile mit sich bringt.

## Patentansprüche

1. Energieversorgungs- und Kühlsystem eines Luftfahrzeuges, umfassend ein Energieversorgungssystem mit wenigstens einer Brennstoffzelle, **dadurch gekennzeichnet, dass** das Energieversorgungs- und Kühlsystem ein mit einem Kühlmittel arbeitendes Kühlsystem zur Kühlung von Komponenten (200) des Flugzeuges bzw. des Energieversorgungssystems aufweist und dass die Brennstoffzelle (10) zum Zwecke der Einstellung einer geeigneten Betriebstemperatur der Brennstoffzelle (10) mit diesem Kühlsystem in Verbindung steht, wobei das durch die Kühlung der Komponenten (200) des Flugzeuges bzw. des Energieversorgungssystems erwärmte Kühlmittel des Kühlsystems genutzt wird, um die Brennstoffzelle (10) auf einer bestimmten Temperatur zu halten.

2. Energieversorgungs- und Kühlsystem nach Anspruch 1, **dadurch gekennzeichnet, dass** es sich bei dem Kühlsystem um ein Kühlsystem zur Kühlung von Elektronikkomponenten handelt.

3. Energieversorgungs- und Kühlsystem nach Anspruch 1 oder 2, **dadurch gekennzeichnet, dass** das Kühlsystem wenigstens einen Wärmetauscher (130) aufweist, bei dem es sich um einen Stauluftkanalwärmetauscher oder um einen Hautwärmetauscher handelt.

4. Energieversorgungs- und Kühlsystem eines Luftfahrzeuges nach einem der vorhergehenden Ansprüche mit einer normalen Energieversorgung, einer Notenergieversorgung, die wenigstens eine Brennstoffzelle aufweist (10), und mit einem oder mehreren Verbrauchern, der oder die im Normalbetrieb durch die normale Energieversorgung versorgbar sind, wobei der oder die Verbraucher derart mit der Brennstoffzelle (10) der Notenergieversorgung in Verbindung stehen, dass sie im Notbetrieb nach einem Ausfall oder einer Störung der normalen Energieversorgung des Luftfahrzeuges unmittelbar oder mittelbar von der Brennstoffzelle (10) mit Energie versorgt werden, sowie mit wenigstens einem aktiven Energiespeicher (20), der derart mit wenigstens einem der Verbraucher in Verbindung steht, dass der oder die Verbraucher im Notbetrieb wenigstens zeitweise aus dem aktiven Energiespeicher (20) mit Energie versorgt werden, bis die Brennstoffzelle (10) ihre Startphase abgeschlossen hat.

5. Energieversorgungs- und Kühlsystem nach Anspruch 4, **dadurch gekennzeichnet, dass** ein dem Energiespeicher (20) vorgeschalteter Wandler (60, 70), vorzugsweise ein bidirektionaler Wandler vorgesehen ist, der mit der normalen Energieversorgung des Flugzeuges in Verbindung steht und über den der Energiespeicher (20) im Normalbetrieb des Flugzeuges vor und/oder während eines Fluges geladen wird.

6. Energieversorgungs- und Kühlsystem nach Anspruch 4 oder 5, **dadurch gekennzeichnet, dass** ein Wandler (60, 70), vorzugsweise ein bidirektionaler Wandler, vorgesehen ist, der derart ausgeführt ist, dass dieser einen Energiefluß von dem Energiespeicher (20) oder einer sonstigen Energiequelle zu der normalen Energieversorgung des Flugzeuges ermöglicht.

7. Energieversorgungs- und Kühlsystem nach einem der Ansprüche 4 bis 6, **dadurch gekennzeichnet, dass** ein Wandler (90, 100), vorzugsweise ein bidirektionaler Wandler vorgesehen ist, der derart ausgeführt ist, dass dieser einen Energiefluß von dem Energiespeicher (20) oder einer sonstigen Energiequelle zu der Notstromversorgung des Flugzeuges und/oder von der Notstromversorgung des Flugzeuges zum Energiespeicher (20) oder einer sonstigen Energiequelle ermöglicht.

8. Energieversorgungs- und Kühlsystem nach einem der Ansprüche 4 bis 7, **dadurch gekennzeichnet, dass** es sich bei dem Energiespeicher (20) um einen Superkondensator handelt.

9. Energieversorgungs- und Kühlsystem nach einem der Ansprüche 4 bis 8, **dadurch gekennzeichnet, dass** das Energieversorgungssystem des Weiteren einen Multikonverter (80) umfaßt, der Leistungselektronik-Komponenten des Energieversorgungssystems enthält.

10. Energieversorgungs- und Kühlsystem nach Anspruch 9, **dadurch gekennzeichnet, dass** die Leistungselektronik-Komponenten als austauschbare Module oder als integrierte Baugruppen ausgeführt sind.

11. Energieversorgungs- und Kühlsystem nach einem der Ansprüche 4 bis 10, **dadurch gekennzeichnet, dass** wenigstens eine elektrische Motorpumpe (50) zur Hydraulikversorgung sowie eine Antriebseinheit (40) zum Antrieb der Motorpumpe (50) vorgesehen ist, wobei die Antriebseinheit (40) wenigstens zwei Elektromotoren umfaßt, die mit unterschiedlichen Energiequellen in Verbindung stehen oder verbindbar sind.

12. Energieversorgungs- und Kühlsystem nach Anspruch 11, **dadurch gekennzeichnet, dass** die wenigstens zwei Elektromotoren die Pumpe über eine gemeinsame Motorwelle oder über ein differentiales Getriebe antreiben.

13. Energieversorgungs- und Kühlsystem nach Anspruch 11 oder 12, **dadurch gekennzeichnet, dass** wenigstens einer der Elektromotoren derart ausgeführt ist, dass er im Normalbetrieb des Luftfahrzeuges von der normalen Energieversorgung des Luftfahrzeuges mit Energie versorgt wird.

14. Energieversorgungs- und Kühlsystem nach einem der Ansprüche 11 bis 13, **dadurch gekennzeichnet, dass** wenigstens einer der Elektromotoren derart ausgeführt ist, dass er im Notbetrieb des Luftfahrzeuges von der Brennstoffzelle (10) bzw. dem aktiven Energiespeicher (20) mit Energie versorgt wird.

15. Energieversorgungs- und Kühlsystem nach einem der Ansprüche 11 bis 14, **dadurch gekennzeichnet, dass** die Antriebseinheit (40) der Pumpe (50) wenigstens zwei Elektromotoren unterschiedlichen Typs aufweist.

16. Energieversorgungs- und Kühlsystem nach einem der Ansprüche 4 bis 15, **dadurch gekennzeichnet, dass** eine Steuereinrichtung vorgesehen ist, die den Energiespeicher (20) derart ansteuert, dass dieser wenigstens solange Energie liefert, bis die Brennstoffzelle (10) zur Energieversorgung zur Verfügung steht.

## Claims

1. Energy supply and cooling system for an aircraft, comprising an energy supply system with at least one fuel cell,
**characterised in that**,
the energy supply and cooling system has a cooling system that operates by means of a coolant for cooling components (200) of the aircraft or the energy supply system, and that the fuel cell (10) is connected to this cooling system for the purposes of adjusting a suitable operating temperature of the fuel cell (10), wherein the coolant of the cooling system, which is heated by the cooling of the components (200) of the aircraft or the energy supply system, is used to maintain the fuel cell (10) at a specific temperature.

2. Energy supply and cooling system according to claim 1, **characterised in that**,
the cooling system is a cooling system for cooling electronic components.

3. Energy supply and cooling system according to claim 1 or 2, **characterised in that**,
the cooling system has at least one heat exchanger (130), wherein this heat exchanger is a ram air channel heat exchanger or a skin heat exchanger.

4. Energy supply and cooling system for an aircraft according to one of the preceding claims, with a normal energy supply, an emergency energy supply that has at least one fuel cell (10), and with one or more loads that can be supplied by the normal energy supply during normal operation, wherein the load(s) is/are connected to the fuel cell (10) of the emergency energy supply in such a way that, during emergency operation after an outage or disruption to the normal energy supply of the aircraft, they are supplied directly or indirectly with energy from the fuel cell (10), as well as with at least one active energy storage device (20), which is connected to at least one of the loads in such a way that, during emergency operation, the load(s) is/are supplied with energy at least occasionally from the active energy storage device (20), until the fuel cell (10) has completed its start-up phase.

5. Energy supply and cooling system according to claim 4, **characterised in that**,
a transducer (60, 70) connected upstream of the energy storage device (20), preferably a bi-directional transducer, is provided, which is connected to the normal energy supply of the aircraft and via which the energy storage device (20) is charged before and/or during a flight during the normal operation of the aircraft.

6. Energy storage and cooling system according to claim 4 or 5,
**characterised in that**,
a transducer (60, 70), preferably a bi-directional transducer, is provided, which is designed in such a way that it enables an energy flow from the energy storage device (20) or another energy source to the normal energy supply of the aircraft.

7. Energy supply and cooling system according to one of claims 4 to 6,
**characterised in that**,
a transducer (90, 100), preferably a bi-directional transducer, is provided, which is designed in such a way that it enables an energy flow from the energy storage device (20) or another energy source to the emergency power supply of the aircraft and/or from the emergency power supply of the aircraft to the energy storage device (20) or another energy source.

8. Energy supply and cooling system according to one of claims 4 to 7,
**characterised in that**,
the energy storage device (20) is a supercapacitor.

9. Energy supply and cooling system according to one of claims 4 to 8,
**characterised in that**,
the energy supply system furthermore comprises a multi-converter (80), which contains the power electronics components of the energy supply system.

10. Energy supply and cooling system according to claim 9, **characterised in that**,
the power electronics components are designed as exchangeable modules or as integrated components.

11. Energy supply and cooling system according to one of claims 4 to 10,
**characterised in that**,
at least one electrical motor pump (50) is provided for hydraulic supply, as well as a drive unit (40) for driving the motor pump (50), wherein the drive unit (40) comprises at least two electric motors that are or can be connected to different energy sources.

12. Energy supply and cooling system according to claim 11, **characterised in that**,
the at least two electric motors drive the pump via a mutual motor shaft or via a differential gear drive.

13. Energy supply and cooling system according to claim 11 or 12,
**characterised in that**,
at least one of the electric motors is designed in such a way that it is supplied with energy from the normal energy supply of the aircraft during the normal operation of the aircraft.

14. Energy supply and cooling system according to one of claims 11 to 13,
**characterised in that**,
at least one of the electric motors is designed in such a way that it is supplied with energy from the fuel cell (10) or the active energy storage device (20) during the emergency operation of the aircraft.

15. Energy supply and cooling system according to one of claims 11 to 14,
**characterised in that**,
the drive unit (40) of the pump (50) has at least two electric motors of different types.

16. Energy supply and cooling system according to one of claims 4 to 15,
**characterised in that**,
a control device is provided, which controls the energy storage device (20) in such a way that it delivers energy at least until the fuel cell (10) is available for supplying energy.

## Revendications

1. Système d'alimentation en énergie et de refroidissement d'un aéronef, comprenant un système d'alimentation en énergie ayant au moins une cellule de combustible, **caractérisé en ce que** le système d'alimentation en énergie et de refroidissement présente un système de refroidissement fonctionnant avec un agent de refroidissement destiné à refroidir des composants (200) de l'avion ou du système d'alimentation en énergie et **en ce que** la cellule de combustible (10) est en liaison avec ce système de refroidissement en vue du réglage d'une température de service appropriée de la cellule de combustible (10), étant entendu que l'agent de refroidissement du système de refroidissement chauffé du fait du refroidissement des composants (200) de l'avion ou du système d'alimentation en énergie est utilisé afin de maintenir la cellule de combustible (10) à une température déterminée.

2. Système d'alimentation en énergie et de refroidissement selon la revendication 1, **caractérisé en ce que**, en ce qui concerne le système de refroidissement, il s'agit d'un système de refroidissement destiné à refroidir des composants électroniques.

3. Système d'alimentation en énergie et de refroidissement selon la revendication 1 ou 2, **caractérisé en ce que** le système de refroidissement présente au moins un échangeur de chaleur (130), étant entendu qu'il s'agit d'un échangeur de chaleur à canal à pression dynamique ou d'un échangeur de chaleur de surface.

4. Système d'alimentation en énergie et de refroidissement d'un aéronef selon l'une des revendications précédentes avec une alimentation en énergie normale, une alimentation en énergie de secours, qui présente au moins une cellule de combustible (10), et avec un ou plusieurs consommateurs, lequel ou lesquels peuvent être alimentés en mode normal par l'alimentation en énergie normale, le ou les consommateurs étant en liaison avec la cellule de combustible (10) de l'alimentation en énergie de secours de telle sorte qu'ils sont alimentés en énergie directement ou indirectement par la cellule de combustible (10) en mode de secours après une défaillance ou un incident de l'alimentation en énergie normale de l'aéronef, et avec au moins un accumulateur d'énergie (20) actif, lequel est en liaison avec au moins un des consommateurs de telle sorte que le ou les consommateurs sont alimentés en énergie en mode de secours au moins temporairement à partir de l'accumulateur d'énergie (20) actif jusqu'à ce que la cellule de combustible (10) ait terminé sa phase de démarrage.

5. Système d'alimentation en énergie et de refroidissement selon la revendication 4, **caractérisé en ce qu'**un convertisseur (60, 70) placé en amont de l'accumulateur d'énergie (20), de préférence un convertisseur bidirectionnel, est prévu, lequel est en liaison avec l'alimentation en énergie normale de l'avion et par lequel l'accumulateur d'énergie (20) est chargé en mode normal de l'avion avant et/ou pendant un vol.

6. Système d'alimentation en énergie et de refroidissement selon la revendication 4 ou 5, **caractérisé en ce qu'**un convertisseur (60, 70), de préférence un convertisseur bidirectionnel, est prévu, lequel est réalisé de telle sorte que celui-ci permet un flux d'énergie partant de l'accumulateur d'énergie (20) ou d'une autre source d'énergie pour l'alimentation en énergie normale de l'avion.

7. Système d'alimentation en énergie et de refroidissement selon l'une des revendications 4 à 6, **caractérisé en ce qu'**un convertisseur (90, 100), de préférence un convertisseur bidirectionnel, est prévu, lequel est réalisé de telle sorte que celui-ci permet un flux d'énergie allant de l'accumulateur d'énergie (20) ou d'une autre source d'énergie à l'alimentation en courant de secours de l'avion et/ou de l'alimentation en courant de secours de l'avion à l'accumulateur d'énergie (20) ou à une autre source d'énergie.

8. Système d'alimentation en énergie et de refroidissement selon l'une des revendications 4 à 7, **caractérisé en ce que**, en ce qui concerne l'accumulateur d'énergie (20), il s'agit d'un supercondensateur.

9. Système d'alimentation en énergie et de refroidissement selon l'une des revendications 4 à 8, **caractérisé en ce que** le système d'alimentation en énergie comprend également un multiconvertisseur (80), qui contient des composants d'électronique de puissance du système d'alimentation en énergie.

10. Système d'alimentation en énergie et de refroidissement selon la revendication 9, **caractérisé en ce que** les composants d'électronique de puissance sont réalisés sous forme de modules interchangeables ou sous forme d'ensembles intégrés.

11. Système d'alimentation en énergie et de refroidissement selon l'une des revendications 4 à 10, **caractérisé en ce qu'**au moins une motopompe (50) électrique est prévue pour l'alimentation hydraulique et une unité d'entraînement (40) pour l'entraînement de la motopompe (50), l'unité d'entraînement (40) comprenant au moins deux moteurs électriques, qui sont en liaison ou peuvent être reliés à différentes sources d'énergie.

12. Système d'alimentation en énergie et de refroidissement selon la revendication 11, **caractérisé en ce que** les au moins deux moteurs électriques entraînent la pompe par l'intermédiaire d'un arbre moteur commun ou par l'intermédiaire d'un engrenage différentiel.

13. Système d'alimentation en énergie et de refroidissement selon la revendication 11 ou 12, **caractérisé en ce qu'**au moins l'un des moteurs électriques est conçu de telle sorte qu'il est alimenté en énergie, lorsque l'aéronef est en mode normal, à partir de l'alimentation en énergie normale de l'aéronef.

14. Système d'alimentation en énergie et de refroidissement selon l'une des revendications 11 à 13, **caractérisé en ce qu'**au moins l'un des moteurs électriques est conçu de telle sorte qu'il est alimenté en énergie, lorsque l'aéronef est en mode de secours, par la cellule de combustible (10) ou l'accumulateur d'énergie (20) actif.

15. Système d'alimentation en énergie et de refroidissement selon l'une des revendications 11 à 14, **caractérisé en ce que** l'unité d'entraînement (40) de la pompe (50) présente au moins deux moteurs électriques de type différent.

16. Système d'alimentation en énergie et de refroidissement selon l'une des revendications 4 à 15, **caractérisé en ce qu'**un dispositif de commande est prévu, lequel actionne l'accumulateur d'énergie (20) de telle sorte que celui-ci fournit de l'énergie au moins jusqu'à ce que la cellule de combustible (10) soit disponible pour l'alimentation en énergie.
